# FASCICULE DE BREVET EUROPEEN

(11) **EP 3 685 712 B1**
(45) Date de publication et mention de la délivrance du brevet: **22.09.2021**
(21) Numéro de dépôt: 20150925.4
(22) Date de dépôt: 09.01.2020
(51) Int. Cl.: A47J 27/08, A47J 27/09

(54) **APPAREIL DE CUISSON SOUS PRESSION À SÉCURITÉ ULTIME**
DRUCKKOCHGERÄT MIT ABSOLUTER SICHERHEIT
PRESSURE-COOKING DEVICE WITH EMERGENCY SAFETY SYSTEM

(30) Priorité: 28.01.2019 FR 1900748
(43) Date de publication de la demande: 29.07.2020
(73) Titulaire: SEB S.A., 69130 Ecully (FR)
(72) Inventeur: BOUYE, Nathalie, 52200 LANGRES (FR); CHAMEROY, Eric, 21260 VERONNES (FR)
(74) Mandataire: Weber, Jean-François

(56) Documents cités:
- EP-A1- 1 938 718
- WO-A1-2017/198815
- FR-A- 757 093

## Description

La présente invention se rapporte au domaine technique général des appareils de cuisson d'aliments sous pression, du genre autocuiseurs, notamment de nature domestique, destinés à former une enceinte de cuisson hermétique au sein de laquelle sont cuits les aliments sous pression de vapeur.

La présente invention concerne plus particulièrement un appareil de cuisson d'aliments sous pression comprenant au moins une cuve et un sous-ensemble de couvercle destiné à être associé à la cuve pour former avec cette dernière une enceinte de cuisson capable de monter en pression, ledit sous-ensemble de couvercle comprenant au moins :
- un couvercle et un élément de verrouillage mobiles l'un par rapport à l'autre entre une première position relative et une deuxième position relative correspondant respectivement à une configuration de fermeture et d'ouverture de l'enceinte,
- un organe de commande déplaçable manuellement d'une position de fermeture vers une position d'ouverture,
- une chaîne cinématique pour transformer le déplacement dudit organe de commande de sa position de fermeture vers sa position d'ouverture en déplacement relatif desdits couvercle et élément de verrouillage de ladite première position relative vers ladite deuxième position relative,
- un dispositif de sécurité à l'ouverture conçu pour bloquer ledit organe de commande dès que la pression régnant dans l'enceinte atteint une valeur de sécurité prédéterminée, afin d'empêcher ledit organe de commande d'atteindre sa position d'ouverture.

Les appareils de cuisson sous pression, en particulier à usage domestique, du genre autocuiseur, sont bien connus dans l'art antérieur. WO2017/198815A1 décrit un appareil de cuisson. De tels appareils comprennent généralement une cuve et un couvercle destiné à être rapporté sur la cuve pour former une enceinte de cuisson hermétiquement close au sein de laquelle sont placés les aliments à cuire. L'intérieur de l'enceinte peut ainsi atteindre des pression et température élevées lorsque l'appareil est soumis à l'influence d'une source de chauffe.

Il existe différents moyens pour réaliser un verrouillage hermétique réversible du couvercle sur la cuve. On connaît en particulier des appareils de cuisson sous pression, habituellement désignés dans le domaine technique sous l'appellation « *autocuiseurs à couvercle rentrant* », mettant en oeuvre un couvercle qui doit d'abord être inséré dans la cuve, sous un rebord supérieur rentrant de cette dernière, avant de venir par en-dessous en contact étanche avec ce rebord supérieur rentrant qui s'étend vers l'intérieur de la cuve et en surplombe le fond.

Il existe de surcroît différentes technologies d'autocuiseurs « *à couvercle rentrant* ». On connaît ainsi les autocuiseurs « *à trou d'homme* », qui mettent en oeuvre d'une part une cuve dont le rebord supérieur rentrant délimite une ouverture ovale et d'autre part un couvercle de forme conjuguée ovale. Cette conjugaison de formes ovales permet d'introduire entièrement le couvercle à l'intérieur de la cuve, puis, une fois qu'il est positionné sous le rebord rentrant, de l'aligner avec l'ouverture de cuve pour qu'il vienne se plaquer de manière étanche contre ledit rebord rentrant. La conception de ces appareils « *à trou d'homme* » interdit bien entendu par nature l'utilisation de couvercle circulaire.

Il existe toutefois également des autocuiseurs à couvercle rentrant permettant la mise en oeuvre de couvercle circulaires. Ces appareils sont généralement connus sous l'appellation « *autocuiseurs à couvercle flexible* ». Ces appareils sont basés sur le principe de l'utilisation d'un couvercle capable de passer, sous l'effet d'une sollicitation mécanique en flexion, d'une configuration géométrique de repos permettant l'introduction du couvercle dans la cuve, à une configuration géométrique déformée permettant de réaliser la fermeture hermétique de la cuve. On connaît ainsi un autocuiseur à couvercle flexible comprenant une cuve dont le rebord supérieur rentrant délimite une ouverture de cuve circulaire et un couvercle obtenu à partir d'un flan métallique circulaire roulé. Dans sa configuration de repos, le couvercle présente une forme de disque « *roulé* », c'est à dire cintré, qui lui permet d'être introduit au sein de la cuve sous le rebord rentrant. Dans sa configuration déformée le couvercle présente une forme de disque sensiblement plat, qui lui permet de venir en appui périphérique continu et uniforme contre la face interne du rebord rentrant, de façon à former une enceinte étanche. Cet appareil à couvercle flexible connu est également doté d'un levier pivotant destiné à commander le passage du couvercle de sa configuration de repos à sa configuration déformée, au moyen d'un système de transmission d'effort à chemin de came et biellette destiné à exercer un effort de traction sur le centre du couvercle pour rapprocher le couvercle de l'étrier.

Afin de prévenir toute ouverture intempestive de cet appareil connu pendant le processus de cuisson sous pression, ce qui pourrait conduire à un échappement brutal du couvercle avec toutes les conséquences désastreuses qui pourraient s'ensuivre, l'appareil est équipé d'un doigt de sécurité à l'ouverture conçu pour bloquer le levier en position de fermeture lorsque la valeur de la pression interne atteint ou excède un seuil de sécurité. Le doigt de sécurité en question est sensible à la pression et est capable d'occuper une position basse, sous l'effet de son propre poids, lorsque la pression interne est en deçà du seuil de sécurité, et une position haute atteinte sous l'effet de la force motrice exercée par la pression interne lorsque le seuil de sécurité est atteint ou dépassé. Le doigt de sécurité coopère avec un verrou monté à coulissement horizontal entre une position de verrouillage et une position de déverrouillage. Lorsque le doigt de sécurité est en position haute, il vient s'insérer dans un orifice ménagé dans le verrou pour bloquer ce dernier en position de verrouillage. Au contraire, en position basse, le doigt de sécurité autorise le verrou à se déplacer librement de sa position de verrouillage à sa position de déverrouillage. Le verrou est rappelé élastiquement en permanence dans sa position de verrouillage, et est pourvu d'une conformation conçue pour s'inter-verrouiller, en position de verrouillage, avec un moyeu destiné à être entraîné en rotation par le levier, lorsque ce dernier se trouve en position de fermeture. Ce blocage du moyeu par le verrou empêche le levier de quitter sa position de fermeture pour gagner sa position d'ouverture sous l'effet d'une sollicitation manuelle.

Afin d'améliorer encore la sécurité de cet autocuiseur connu, ce dernier est pourvu d'un système de débrayage permettant de découpler mécaniquement le moyeu du levier de commande lorsqu'un effort d'ouverture important est exercé de manière intempestive sur le levier, alors que le verrou bloque le moyeu. Ce système de débrayage connu comporte plus précisément un ergot de débrayage soumis à la contrainte d'un ressort. Ledit ergot de débrayage relie en position normale le levier au moyeu de façon à permettre d'entraîner le moyeu en rotation par déplacement rotatif du levier. Lorsque le moyeu est bloqué par le verrou, et qu'un utilisateur exerce malgré tout de manière intempestive un effort important sur le levier, l'ergot de débrayage va s'effacer à l'encontre de la force de rappel du ressort pour autoriser la rotation du levier relativement au moyeu, lequel n'est donc plus entraîné par le levier.

Cette conception connue permet notamment d'éviter, en fonctionnement normal, qu'un effort intempestif exercé sur le levier pour l'amener de sa position de verrouillage à sa position de déverrouillage, alors que la pression interne atteint ou excède le seuil de sécurité, soit repris directement par le verrou et/ou le doigt de sécurité. En l'absence du système de débrayage évoqué ci-avant, un effort important exercé sur le levier pourrait entraîner, par déformation plastique ou détérioration des pièces de sécurité, et notamment du verrou et/ou du doigt de sécurité, une légère rotation du moyeu dans le sens de l'ouverture, conduisant à un relâchement de la contrainte de fermeture exercée sur le couvercle métallique. Cela entraînerait un risque de perte d'étanchéité brutale au niveau du couvercle, avec expulsion violente d'un jet de vapeur vers l'extérieur pouvant atteindre l'utilisateur et occasionner un accident.

Cet appareil connu donne donc globalement satisfaction, notamment en matière de sécurité d'utilisation. Il n'en présente pas moins certains inconvénients découlant directement de sa conception sécuritaire spécifique décrite ci-avant.

Ainsi, il n'est pas impossible que l'ergot de débrayage puisse rester coincé et ne pas s'effacer en réponse à l'exercice sur le levier d'un effort d'ouverture important alors que le verrou est en position de verrouillage. L'ergot est en effet monté à coulissement glissant dans un logement accueillant également le ressort de rappel susvisé. Au fil du temps, et en fonction des conditions d'utilisation, le glissement de l'ergot dans son logement peut être altéré, conduisant à un éventuel grippage. Un tel grippage peut également résulter d'une détérioration du ressort, lequel pourrait alors par exemple venir coincer l'ergot de débrayage. Il est également possible que l'exercice d'un effort d'ouverture intempestif sur le levier conduise à détériorer l'ergot de débrayage (qui est en matière plastique) ou son environnement immédiat, notamment les conformations du levier avec lesquels il coopère, entraînant par exemple une impossibilité d'entraîner l'ergot de débrayage dans sa position débrayée au moyen du levier.

Ce risque de blocage intempestif de l'ergot de débrayage est bien entendu critique, puisqu'il peut conduire, comme exposé dans ce qui précède, à permettre à l'utilisateur de relâcher légèrement la contrainte de fermeture exercée sur le couvercle, ce qui induit un risque de projection brutale de vapeur vers l'extérieur.

Les objets assignés à la présente invention visent en conséquence à remédier aux différents inconvénients énumérés précédemment et à proposer un nouvel appareil de cuisson d'aliments sous pression qui, tout en étant de construction particulièrement fiable et compacte, présente un niveau de sécurité d'utilisation amélioré.

Un autre objet de l'invention vise à proposer un nouvel appareil de cuisson d'aliments sous pression qui, tout en étant de construction extrêmement simple, met en oeuvre une multiplicité de dispositifs sécuritaires hiérarchisés.

Un autre objet de l'invention vise à proposer un nouvel appareil de cuisson d'aliments sous pression dont la conception garantit l'impossibilité pour l'utilisateur d'exercer des efforts mécaniques importants sur des pièces de sécurité de l'appareil en cas d'erreur de manipulation.

Un autre objet de l'invention vise à proposer un nouvel appareil de cuisson d'aliments sous pression de construction extrêmement robuste et légère.

Un autre objet de l'invention vise à proposer un nouvel appareil de cuisson d'aliments sous pression dont l'utilisation est particulièrement simple et intuitive.

Un autre objet de l'invention vise à proposer un nouvel appareil de cuisson d'aliments sous pression dont la construction permet de procurer une sécurité ultime à l'ouverture de façon particulièrement discrète et sans introduire de risques secondaires ou d'effet anxiogène pour l'utilisateur.

Un autre objet de l'invention vise à proposer un nouvel appareil de cuisson d'aliments sous pression qui met en oeuvre une cinématique de fonctionnement extrêmement simple et fiable.

Les objets assignés à l'invention sont atteints à l'aide d'un appareil de cuisson d'aliments sous pression comprenant au moins une cuve et un sous-ensemble de couvercle destiné à être associé à la cuve pour former avec cette dernière une enceinte de cuisson capable de monter en pression, ledit sous-ensemble de couvercle comprenant au moins :
- un couvercle et un élément de verrouillage mobiles l'un par rapport à l'autre entre une première position relative et une deuxième position relative correspondant respectivement à une configuration de fermeture et d'ouverture de l'enceinte,
- un organe de commande déplaçable manuellement d'une position de fermeture vers une position d'ouverture,
- une chaîne cinématique pour transformer le déplacement dudit organe de commande de sa position de fermeture vers sa position d'ouverture en déplacement relatif desdits couvercle et élément de verrouillage de ladite première position relative vers ladite deuxième position relative,
- un dispositif de sécurité à l'ouverture conçu pour bloquer ledit organe de commande dès que la pression régnant dans l'enceinte atteint une valeur de sécurité prédéterminée, afin d'empêcher ledit organe de commande d'atteindre sa position d'ouverture,
ledit appareil étant caractérisé en ce qu'au moins l'un desdits chaîne cinématique et organe de commande inclut une portion prédéfinie à rupture programmée conçue pour se rompre en réponse à l'application, sur ledit organe de commande bloqué par ledit dispositif de sécurité à l'ouverture, d'un effort présentant une première intensité prédéterminée contraignant ledit organe de commande vers sa position d'ouverture, la rupture de ladite portion prédéfinie à rupture programmée empêchant ainsi l'ouverture de l'enceinte.

D'autres objets et avantages particuliers de l'invention apparaîtront plus en détails à la lecture de la description qui suit, ainsi qu'à l'aide des dessins annexés, fournis à titre purement illustratif et non limitatif, parmi lesquels :
Figure 1 illustre, selon une vue en perspective, un appareil de cuisson à couvercle flexible conforme à l'invention, ledit appareil formant une enceinte de cuisson qui se trouve dans une configuration de fermeture.

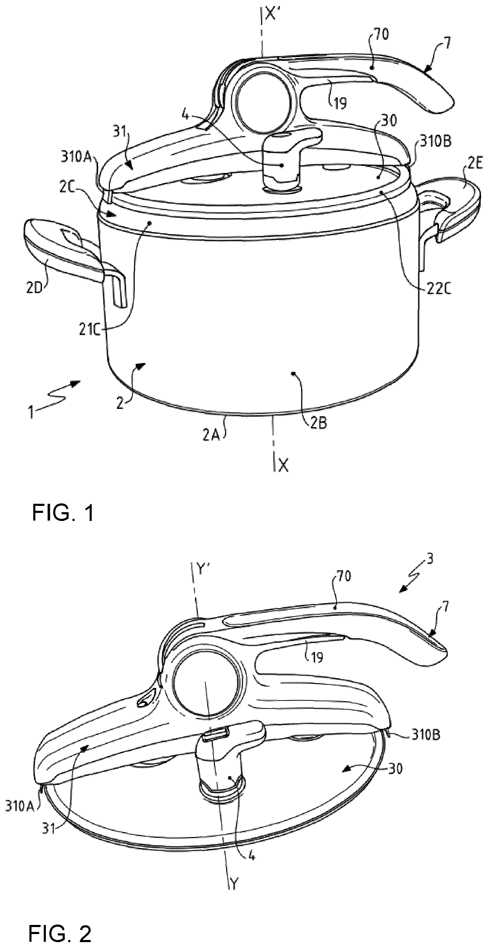

Figure 2 illustre, selon une vue schématique en perspective de dessus, un détail de réalisation de l'appareil de la figure 1, correspondant à un sous-ensemble de couvercle incluant, outre un couvercle métallique, un module d'accostage et de commande qui comprend d'une part l'organe de commande (sous forme d'un levier), en l'espèce en position de fermeture, et d'autre part l'élément de verrouillage (sous forme d'une traverse d'accostage), le déplacement manuel du levier commandant, par l'intermédiaire d'une chaîne cinématique débrayable, le déplacement du couvercle relativement à la traverse d'accostage.
Figure 3 illustre, selon une vue schématique en perspective de dessous, le sous-ensemble de couvercle de la figure 2.
Figure 4 illustre, selon une vue schématique en perspective, l'appareil de la figure 1 qui forme cette fois une enceinte de cuisson en configuration d'ouverture.
Figure 5 illustre, selon une vue schématique en perspective, le sous-ensemble de couvercle de l'appareil de la figure 4, avec le levier formant organe de commande en position d'ouverture.
Figure 6 illustre, selon une vue schématique en coupe, le module d'accostage et de commande qui fait partie du sous-ensemble de couvercle illustré à la figure 2, avec le levier formant organe de commande en position de fermeture.
Figure 7 illustre, selon une vue schématique en perspective, une pièce qui forme le levier faisant office d'organe de commande dans le mode de réalisation illustré aux figures précédentes.
Figure 8 illustre, selon une vue schématique en perspective, un moyeu qui fait partie de la chaîne cinématique mise en oeuvre dans le mode de réalisation illustré aux figures précédentes.
Figure 9 illustre, selon une vue schématique partiellement en coupe, une partie du module d'accostage de la figure 6.

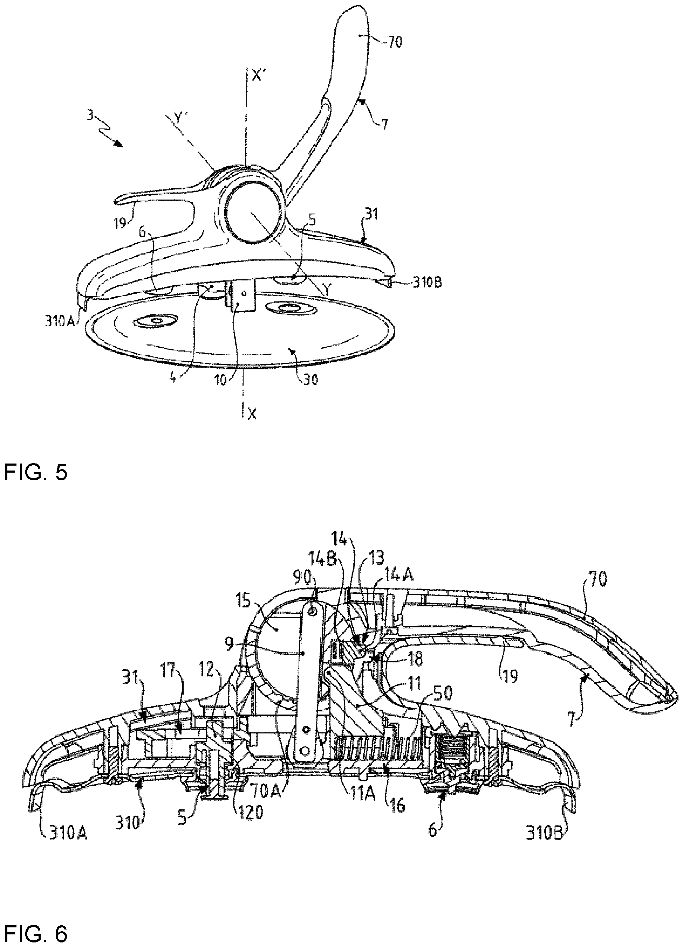

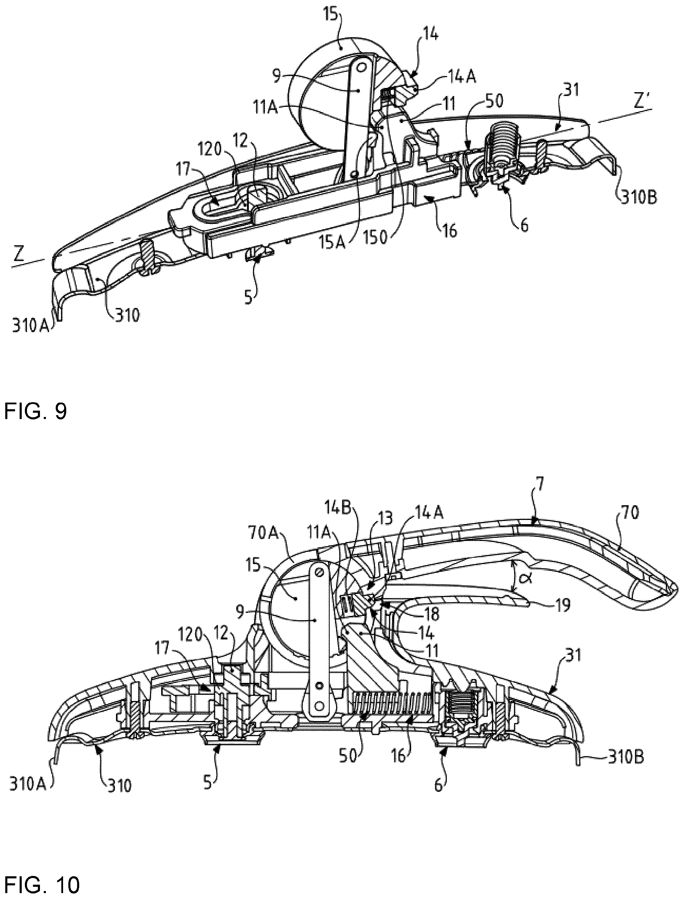

Figure 10 illustre, selon une vue schématique en coupe, le module d'accostage et de commande de la figure 6 qui se trouve cette fois dans un état précédant immédiatement la rupture de la portion prédéfinie à rupture programmée, le levier formant organe de commande se trouvant dans une position intermédiaire, légèrement décalée par rapport à la position de fermeture, sous l'effet d'un effort d'ouverture intempestif exercé sur le levier alors que le dispositif de sécurité à l'ouverture bloque le levier pour l'empêcher de gagner sa position d'ouverture, et que le débrayage n'a accidentellement pas fonctionné.

L'appareil 1 de cuisson d'aliments sous pression conforme à l'invention est destiné à assurer la cuisson d'aliments, sous pression de vapeur. De façon préférentielle, l'appareil 1 de cuisson sous pression est constitué par un appareil domestique de cuisson sous pression, conçu pour une utilisation dans un contexte familial.

Conformément à l'invention, l'appareil 1 comprend au moins une cuve 2 qui forme un récipient de cuisson destiné à accueillir les aliments. La cuve 2 présente par exemple, comme illustré aux figures, une symétrie de révolution selon un axe X-X'. Dans ce qui suit, l'adjectif « *axial* » se réfère à la direction de cet axe de symétrie X-X', direction qui s'apparente à la direction verticale lorsque l'appareil 1 est en fonctionnement normal. Bien évidemment, la cuve 2 peut tout à fait ne pas affecter une forme de révolution (et être par exemple de forme ovale), sans pour autant que l'on sorte du cadre de l'invention. La cuve 2 est avantageusement pourvue de poignées 2D, 2E disposées de manière diamétralement opposées et attachées à la paroi latérale de 2B. La cuve 2 est avantageusement fabriquée en un matériau métallique (par exemple acier inoxydable ou aluminium), et comprend un fond 2A ainsi qu'une paroi latérale 2B qui s'élève à partir et à la périphérie du fond 2A. De préférence, la cuve 2 comprend un rebord rentrant 2C qui s'étend de façon centripète à partir de la paroi latérale 2B, préférentiellement à partir du sommet de cette dernière. De préférence, tel que cela est illustré aux figures, la paroi latérale 2B s'étend entre une extrémité inférieure reliée à la périphérie du fond 2A et une extrémité supérieure prolongée par le rebord rentrant 2C, lequel converge radialement vers le centre de la cuve 2, c'est à dire en direction de l'axe X-X'. Le rebord rentrant 2C présente une face interne située en regard de l'intérieur de la cuve 2, c'est à dire orientée vers le fond 2A. De préférence, le rebord rentrant 2C comprend un tronçon sensiblement tronconique 21C qui s'étend, par exemple selon une direction oblique vers le haut, dans le prolongement de la paroi latérale 2B, vers l'intérieur de la cuve 2, en surplomb de l'intérieur de la cuve 2 et de son fond 2A. Le tronçon tronconique 21C se termine lui-même avantageusement par un bord roulé 22C qui ménage un logement destiné à accueillir un joint d'étanchéité annulaire, lequel vient habiller la face interne du rebord rentrant 2C. Avantageusement, la cuve 2 comprend ainsi une ouverture délimitée par le rebord rentrant 2C, ouverture qui permet d'accéder à l'intérieur de la cuve 2, pour y introduire les aliments à cuire. Le diamètre de cette ouverture définie par le rebord rentrant 2C est sensiblement inférieur au diamètre de la paroi latérale 2B.

Conformément à l'invention, l'appareil 1 comprend également au moins un sous-ensemble de couvercle 3 destiné à être associé à la cuve 2 pour former avec cette dernière une enceinte de cuisson capable de monter en pression. Ledit sous-ensemble de couvercle 3 comprend au moins un couvercle 30, réalisé de préférence en un matériau métallique (acier inoxydable ou aluminium par exemple). Le sous-ensemble de couvercle 3 comprend également au moins un élément de verrouillage 31, qui coopère avec le couvercle 30 et la cuve 2 pour former ladite enceinte de cuisson capable de monter en pression.

Dans le mode de réalisation illustré aux figures, l'appareil 1 de cuisson d'aliments sous pression est un appareil de cuisson sous pression au couvercle rentrant. Cela signifie que pour former, à l'aide de la cuve 2 et du couvercle 3, une enceinte étanche de cuisson, il est nécessaire d'introduire tout d'abord entièrement le couvercle 30 à l'intérieur de la cuve 2, sous le bord supérieur libre (formé par le rebord rentrant 2C) délimitant l'ouverture d'accès à l'intérieur de la cuve 2, puis d'imprimer audit couvercle 30 un mouvement vertical de bas en haut pour que le couvercle 30 vienne en appui étanche contre et sous ledit bord supérieur libre (i.e. contre la face inférieure du rebord rentrant 2C), pour obtenir une enceinte de cuisson hermétiquement close. Ce principe général sous-tendant la construction et le fonctionnement des appareils de cuisson sous pression à couvercle rentrant est bien connu en tant que tel.

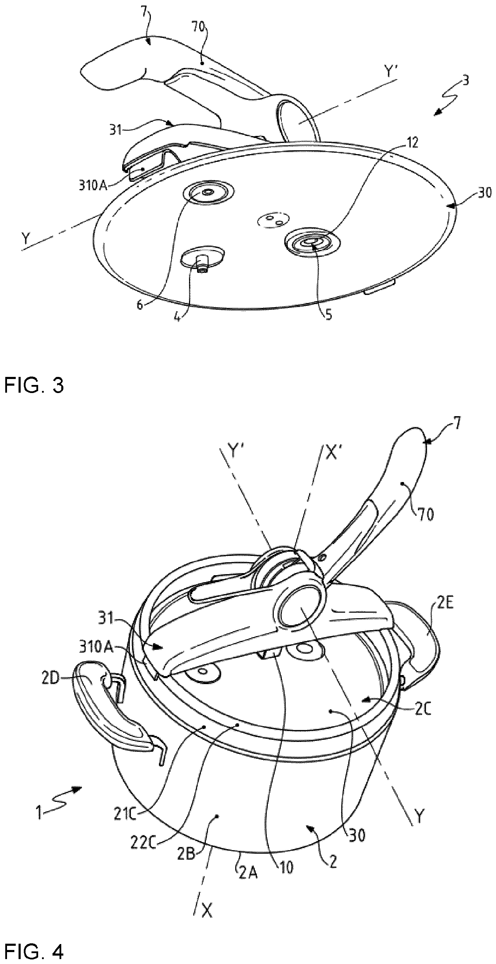

Dans ce mode de réalisation particulier illustré aux figures, l'élément de verrouillage 31 comprend une traverse d'accostage 310 qui est destinée être rapportée sur la cuve 2 de façon à reposer sur et contre cette dernière (cf. figures 1 et 4), ledit couvercle 30 étant suspendu à ladite traverse d'accostage 310.

L'invention n'est cependant pas limitée à un appareil de cuisson d'aliments sous pression au couvercle rentrant comme illustré, mettant en oeuvre en tant qu'élément de verrouillage 31 une traverse d'accostage 310. Il est par exemple parfaitement envisageable, sans pour autant que l'on sorte du cadre de l'invention, que l'appareil de cuisson d'aliments sous pression soit par exemple un appareil à mâchoires dont le couvercle est destiné à être rapporté sur la cuve plutôt qu'à l'intérieur de cette dernière, auquel cas l'élément de verrouillage n'est pas formé par une traverse d'accostage comme illustré, mais inclut plutôt un ou plusieurs bras mobiles à translation radiale relativement au couvercle et portant chacun une mâchoire de verrouillage pour verrouiller le couvercle relativement à la cuve.

En tout état de cause, quel que soit le mode de réalisation retenu, le couvercle 30 et l'élément de verrouillage 31 sont mobiles l'un par rapport à l'autre entre une première position relative (figures 1 et 2) et une deuxième position relative (figures 4 et 5) correspondant respectivement à une configuration de fermeture et à une configuration d'ouverture de l'enceinte.

Par souci de concision, la description qui suit sera centrée sur un mode de réalisation correspondant, comme illustré aux figures, à un appareil 1 de cuisson d'aliments sous pression à couvercle rentrant mettant en œuvre, en tant qu'élément de verrouillage 31 une traverse d'accostage 310, laquelle se présente par exemple sous la forme d'une plaque métallique allongée s'étendant longitudinalement entre deux extrémités opposées pourvues chacune d'un bord tombant respectif 310A, 310B, permettant d'assurer un positionnement correct, autocentré, de la traverse d'accostage 310 sur la cuve 2. La traverse d'accostage 310 est ainsi avantageusement destinée à venir en appui périphérique contre et sur le rebord rentrant 2C, du côté de la face externe de ce dernier, de façon à être disposé en travers de l'ouverture de la cuve 2, et venir ainsi en appui externe en deux régions diamétralement opposées du rebord rentrant 2C. Le sous-ensemble de couvercle 3 est dans ce cas plus précisément conçu pour que dans ladite configuration d'ouverture de l'enceinte (illustré à la figure 4), ladite traverse d'accostage 310 repose sur la cuve 2 au-dessus du rebord rentrant 2C, tandis que le couvercle suspendu à la traverse d'accostage 310 se trouve dans la cuve 2, sous ledit rebord rentrant 2C et à distance de ce dernier, et pour qu'en configuration de fermeture de l'enceinte (figure 2), la traverse d'accostage 310 repose sur la cuve 2 au-dessus du rebord rentrant 2C tandis que le couvercle 30 suspendu à la traverse 310 se trouve dans la cuve 2, sous ledit rebord rentrant 2C et plaqué contre ce dernier, et par exemple contre un joint d'étanchéité porté par ce dernier, pour permettre la montée en pression de l'enceinte de cuisson ainsi formée. La première position relative du couvercle 30 et de l'élément de verrouillage 31, qui correspond à la configuration de fermeture de l'enceinte, est donc une position dans laquelle le couvercle 30 et l'élément de verrouillage 31 sont suffisamment rapprochés l'un de l'autre pour que le couvercle 30 vienne en appui étanche contre la face interne du bord rentrant 2C. Quant à la deuxième position relative du couvercle 30 et de l'élément de verrouillage 31, correspondant à la configuration d'ouverture de l'enceinte, elle met en œuvre un écartement relatif du couvercle 30 et de l'élément de verrouillage 31 suffisant pour établir une mise en communication de l'intérieur de l'enceinte avec l'extérieur.

Avantageusement, le couvercle 30 est un couvercle déformable susceptible d'évoluer entre une configuration géométrique de repos permettant l'introduction du couvercle 30 dans la cuve 2 et correspondant à la configuration d'ouverture de l'enceinte, et une configuration géométrique déformée correspondant à la configuration de fermeture de l'enceinte et permettant au couvercle 30 de venir en contact sensiblement étanche contre la cuve 2 pour permettre la montée en pression de l'enceinte. Dans ce mode de réalisation préférentiel, la forme du couvercle 30 peut être modifiée par application d'une sollicitation mécanique commandée par l'utilisateur. La description qui suit est centrée, pour des raisons de concision, exclusivement sur un appareil 1 dont le couvercle 30 est un couvercle déformable, et plus préférentiellement un couvercle déformable de façon réversible, pour permettre à l'utilisateur d'ouvrir et fermer à volonté l'enceinte de cuisson. L'invention n'est toutefois pas limitée à la mise en œuvre d'un tel couvercle 30 déformable, et son enseignement s'applique également pleinement à d'autres types d'autocuiseurs à couvercle rentrant, notamment aux autocuiseurs à trou d'homme.

De façon préférentielle, le couvercle 3 est un couvercle flexible, c'est-à-dire qu'il est conçu pour changer de forme sous l'effet d'une sollicitation mécanique en flexion. Par exemple, tel que cela est bien connu en tant que tel, le couvercle 3 est constitué d'un flan métallique discoïde qui a subi un roulage de telle sorte qu'il affecte au repos, en l'absence de sollicitation mécanique extérieure de déformation, une forme de selle, c'est-à-dire une forme courbe sensiblement en U. En d'autres termes, le couvercle 30 présente avantageusement au repos, en l'absence de sollicitation de déformation, une forme de disque cintré, qui correspond en projection sur un plan horizontal à une ellipse. Grâce à cette forme gauche, le couvercle 30 peut être inséré à l'intérieur de la cuve 2 à travers l'orifice délimité par le bord rentrant 2C, alors que le diamètre du flan discoïde (avant cintrage) à partir duquel est constitué le couvercle 30 est supérieur à celui de l'ouverture de cuve délimitée par le bord rentrant 2C. L'appareil 1 est avantageusement pourvu de moyens, dont fait avantageusement partie l'élément de verrouillage 31, pour mettre en contrainte le couvercle 30 afin de l'amener dans sa configuration géométrique déformée, dans laquelle il présente sensiblement une forme circulaire dont le bord périphérique vient épouser la face interne du rebord rentrant de 2C pour fermer de manière étanche l'enceinte de cuisson.

Afin de maîtriser la pression de cuisson, l'appareil 1 comprend avantageusement un moyen de régulation de pression, comme par exemple une soupape de régulation 4. Ladite soupape de régulation de pression 4 est montée de préférence sur le couvercle 30, et est conçue pour maintenir la pression régnant dans l'enceinte de cuisson à une valeur prédéterminée sensiblement constante, dite pression de fonctionnement, laquelle excède la pression atmosphérique d'une valeur qui est comprise par exemple entre sensiblement 10 et 120 kPa, ou par exemple entre 50 et 55 kPa, ou entre 85 et 90 kPa, ou qui est par exemple de l'ordre de 65 kPa, ou de l'ordre de 100 kPa. L'appareil 1 de cuisson d'aliments sous pression comporte avantageusement d'autres organes de fonctionnement (par exemple un dispositif de sécurité à l'ouverture 5 qui sera décrit plus en détails dans ce qui suit, une soupape de sécurité à la surpression 6, etc.).

Conformément à l'invention, l'appareil 1 comprend également un organe de commande 7 déplaçable manuellement d'une position de fermeture vers une position d'ouverture, afin de permettre à un utilisateur de commander manuellement le passage de la première position relative à la deuxième position relative des couvercle 30 et élément de verrouillage 31. De préférence, l'organe de commande 7 est également déplaçable manuellement de ladite position d'ouverture vers ladite position de fermeture, afin de commander le passage de la deuxième position relative (configuration d'ouverture) à la première position relative (configuration de fermeture). Par exemple, dans le mode de réalisation illustré aux figures, l'organe de commande 7 est conçu pour commander manuellement le déplacement du couvercle 30 relativement à la traverse d'accostage 310 entre une position haute (figures 1 et 2) d'une part et une position basse (figures 4 et 5) d'autre part, et réciproquement. Le passage de la position haute à la position basse s'effectue en l'espèce par translation verticale du couvercle selon l'axe vertical central X-X'. De préférence, l'organe de commande 7 est monté à rotation selon un axe de rotation Y-Y' qui est avantageusement sensiblement perpendiculaire et sécant à l'axe vertical central X-X'. Dans le mode de réalisation illustré aux figures, l'organe de commande 7 est conçu pour exercer sur le couvercle 3 un effort sensiblement vertical, selon la direction X-X', de préférence au centre dudit couvercle 30 pour faire passer ce dernier de sa position basse à sa position haute par traction verticale du bas vers le haut, et inversement de sa position haute à sa position basse par relâchement de l'effort de traction exercée, le couvercle 30 retournant en position basse sous l'effet de son propre poids et/ou de l'action de rappel d'un ressort. Dans le cas illustré aux figures où l'appareil 1 est un appareil à couvercle flexible, l'organe de commande 7 exerce une double fonction, savoir une fonction de commande du déplacement du couvercle 30 relativement à l'élément de verrouillage 31 formé par la traverse d'accostage 310, et une fonction de commande de la déformation en flexion du couvercle 30, ces fonctions intervenant de préférence successivement. Par exemple, sous l'effet de l'effort de traction vertical exercé par l'organe de commande 7 au niveau du centre du couvercle 30, ce dernier va tout d'abord se déplacer globalement selon un trajet vertical parallèle à l'axe X-X' jusqu'à venir en butée, vers sa périphérie, contre le rebord rentrant 2C, lequel est avantageusement habillé sur sa face interne par un joint annulaire d'étanchéité. L'effort de traction du bas vers le haut exercé par l'organe de commande 7 est alors poursuivi tandis que le couvercle 30 est en appui contre le rebord rentrant 2C, ce qui occasionne alors une déformation élastique en flexion du couvercle 30. Cette déformation conduit le couvercle 30 à adopter une forme de disque sensiblement plat (et non plus cintré), forme lui permettant d'épouser de façon sensiblement uniforme et continue, sur sensiblement toute sa périphérie, le rebord rentrant 2C. On obtient ainsi une enceinte de cuisson suffisamment étanche pour permettre la cuisson des aliments à une pression significativement supérieure à la pression atmosphérique.

Le sous-ensemble de couvercle 3 comprend au moins une chaîne cinématique pour transformer le déplacement de l'organe de commande 7 de sa position de fermeture (figures 1, 2 et 7) vers sa position d'ouverture (figures 4 et 5) en déplacement relatif desdits couvercle 30 et élément de verrouillage 31 de ladite première position relative vers ladite deuxième position relative. De préférence, la chaîne cinématique permet réciproquement de transformer le déplacement de l'organe de commande 7 de sa position d'ouverture vers sa position de fermeture en déplacement relatif desdits couvercle 30 et élément de verrouillage 31 de ladite deuxième position relative vers ladite première position relative. La chaîne cinématique est formée par une ou plusieurs pièces reliant l'organe de commande 7 au couvercle 30 et/ou à l'élément de verrouillage 31. La chaîne cinématique assure avantageusement une transmission et/ou une transformation de l'effort manuel exercé sur l'organe de commande 7, afin que cet effort permette de déplacer le couvercle 30 relativement à l'élément de verrouillage 31, pour passer de l'une des configurations de fermeture et d'ouverture à l'autre.

Avantageusement, le couvercle 30 est suspendu à la traverse d'accostage 310 par l'intermédiaire de ladite chaîne cinématique, ladite traverse d'accostage 310 embarquant de préférence ledit organe de commande 7, lequel est monté à rotation, en l'espèce selon l'axe Y-Y', relativement à ladite traverse d'accostage 310. De préférence, l'organe de commande 7 comprend un levier 70 conçu pour être actionné manuellement par l'utilisateur et avantageusement monté mobile, en l'espèce à rotation selon l'axe de rotation Y-Y', relativement à la traverse d'accostage 310 entre une position rabattue correspondant à la position de fermeture et au moins une position relevée (figure 5) correspondant à la position d'ouverture. Le levier 70 est avantageusement embarqué dans un module dont fait également partie la traverse d'accostage 310, module disposé sur le couvercle 30 de sorte que le couvercle 30 est mobile relativement audit module. Ladite chaîne cinématique prévue pour transformer le déplacement de l'organe de commande 7 en déplacement du couvercle 30 relativement à l'élément de verrouillage 31 comprend par exemple au moins une biellette 9 reliée à l'une de ses extrémités au couvercle 30, par exemple à une pièce d'attache 10 solidaire du couvercle 30 et guidée à coulissement vertical à travers la traverse d'accostage 310, tandis que l'extrémité opposée de la biellette 9 est reliée à pivotement, directement ou indirectement, au levier 70 formant avantageusement l'organe de commande 7, en un point qui est décalé par rapport à l'axe de rotation Y-Y' dudit levier 70. Cet agencement préférentiel permet de transformer, et avantageusement de démultiplier, le mouvement de rotation du levier 70 selon l'axe Y-Y' en mouvement de translation verticale de la pièce d'attache 10 et donc du couvercle 30 qui lui est attaché. L'invention n'est cependant absolument pas limitée à un organe de commande manuelle 7 comprenant un levier 70 rotatif actionnant un système à biellette, et il est alternativement tout à fait envisageable de recourir à tout autre système de transformation et de transmission mécanique, reposant par exemple sur des engrenages, crémaillères, courroies, cames ou tout autre dispositif susceptible de participer à la formation de la chaîne cinématique.

Comme illustré aux figures, le sous-ensemble de couvercle 3 comprend également au moins un dispositif de sécurité à l'ouverture 5 conçu pour bloquer l'organe de commande 7 dès que la pression régnant dans l'enceinte de cuisson atteint une valeur de sécurité prédéterminée, par exemple de l'ordre de 4 kPa au-dessus de la pression atmosphérique, afin d'empêcher ledit organe de commande 7 d'atteindre sa position d'ouverture correspondant à la configuration d'ouverture de l'enceinte. Le dispositif de sécurité à l'ouverture 5 interagit donc avec l'organe de commande 7, dès que la pression interne de l'enceinte atteint ou dépasse la valeur de sécurité prédéterminée, pour empêcher l'organe de commande 7 de se déplacer, à partir de sa position de fermeture, jusqu'à sa position d'ouverture. Ceci permet d'assurer une fonction de sécurité à l'ouverture, en évitant qu'un utilisateur ne puisse parvenir à ouvrir l'appareil 1 alors que la pression régnant au sein de l'enceinte de cuisson est incompatible avec une ouverture sécurisée et risque d'entraîner a *minima* un échappement de vapeur brutal susceptible de blesser l'utilisateur.

Avantageusement, le dispositif de sécurité à l'ouverture 5 comprend un verrou 11 mobile entre une position de verrouillage dans laquelle il empêche lesdits couvercle 30 et élément de verrouillage 31 de gagner ladite deuxième position relative correspond à la configuration d'ouverture de l'enceinte et au moins une position de déverrouillage autorisant lesdits couvercle 30 et élément de verrouillage 31 à gagner ladite deuxième position relative. A cette fin, le verrou 11 agit directement ou indirectement (comme illustré aux figures) sur l'organe de commande 7 pour entraver le déplacement de ce dernier, l'empêchant ainsi d'atteindre sa position d'ouverture à partir de sa position de fermeture. Avantageusement, le dispositif de sécurité à l'ouverture 5 comprend également un doigt de sécurité 12 sensible à la pression régnant à l'intérieur de l'enceinte, ledit doigt de sécurité 12 étant mobile entre d'une part une position basse (illustré aux figures 6 et 9) dans laquelle le doigt de sécurité 12 est rappelé lorsque le niveau de pression dans l'enceinte est inférieure à ladite valeur de sécurité prédéterminée, et d'autre part une position haute (illustré à la figure 10) dans laquelle le doigt de sécurité 12 est propulsé par la pression dès que le niveau de pression dans l'enceinte atteint ladite valeur de sécurité prédéterminée. Ledit doigt de sécurité 12 coopère, en position haute, avec le verrou 11 pour interdire à ce dernier de quitter sa position de verrouillage. Le recours au verrou 11 n'est toutefois pas obligatoire, et il est par exemple envisageable que le doigt de sécurité 12 interagisse directement ou indirectement avec l'organe de commande 7, sans passer par l'intermédiaire d'un verrou. Le recours au verrou 11 est toutefois préféré car il permet d'éviter d'exposer le doigt de sécurité 12 à d'éventuels efforts mécaniques importants.

Avantageusement, la chaîne cinématique est débrayable, de façon à évoluer de manière réversible entre d'une part une configuration embrayée (illustré aux figures) dans laquelle elle transforme le déplacement dudit organe de commande 7 de sa position de fermeture vers sa position d'ouverture en déplacement relatif desdits couvercle 30 et élément du verrouillage 31 de ladite première position relative à ladite deuxième position relative, et d'autre part une configuration débrayée dans laquelle elle autorise le déplacement dudit organe de commande 7 de sa position de fermeture vers sa position d'ouverture, sans toutefois transformer ledit déplacement de l'organe de commande 7 en déplacement relatif des couvercle 30 et élément du verrouillage 31. En d'autres termes, lorsque la chaîne cinématique est débrayée, le déplacement de l'organe de commande 7, en particulier hors de sa position de fermeture, n'entraîne pas de mouvement concomitant du couvercle 30 relativement à l'élément de verrouillage 31. Avantageusement, ladite chaîne cinématique est conçue pour passer automatiquement de sa configuration embrayée à sa configuration débrayée en réponse à l'application, sur ledit organe de commande 7 bloqué par ledit dispositif de sécurité à l'ouverture 5, d'un effort contraignant l'organe de commande 7 vers sa position d'ouverture. Ainsi, le caractère débrayable de la chaîne cinématique permet d'éviter de transmettre aux pièces composant la chaîne cinématique, mais aussi à celles formant le dispositif de sécurité 5, un effort intempestif d'ouverture, alors que l'organe de commande 7 est bloqué en déplacement par le dispositif de sécurité 5 en raison du niveau de pression élevé régnant dans l'enceinte. Une telle conception est connue en tant que telle et correspond à l'enseignement du document WO-2017/198815, et plus précisément à l'enseignement relatif au mode de réalisation des figures 1 à 10 de ce document, dont le contenu est incorporé par référence. Avantageusement, et conformément à l'enseignement du document WO-2017/198815 précité, la chaîne cinématique est conçue pour retourner automatiquement dans sa configuration embrayée à partir de sa configuration débrayée lorsque ledit organe de commande 7 retourne en position de fermeture. La chaîne cinématique présente donc avantageusement un caractère débrayable avec réarmement automatique, pour permettre à la chaîne cinématique de retrouver automatiquement sa configuration embrayée en ramenant simplement l'organe de commande 7 en position de fermeture, après que le débrayage se soit déclenché sous l'effet de l'exercice, sur l'organe de commande 7 bloqué en position par le dispositif 5, d'un effort intempestif d'ouverture suffisamment important.

Avantageusement, la chaîne cinématique comprend un dispositif de transmission débrayable qui inclut lui-même un premier élément d'accouplement 13 relié, directement ou indirectement, à l'organe de commande 7 et un deuxième élément d'accouplement 14 relié, directement ou indirectement, au couvercle 30 et/ou audit élément de verrouillage 31. L'un au moins desdits premier et deuxième éléments d'accouplement 13, 14 évolue entre :
- d'une part une configuration active (illustrée aux figures) correspondant à la configuration embrayée et permettant un interengagement desdits premier et deuxième éléments d'accouplement 13, 14 pour accoupler mécaniquement l'organe de commande 7 avec le couvercle 30 et/ou l'élément de verrouillage 31, en vue de convertir l'effort manuel exercé sur l'organe de commande 7 en déplacement relatif du couvercle 30 et de l'élément de verrouillage 31 de la première position relative à la deuxième position relative,
- et d'autre part une configuration inactive (non illustrée) empêchant l'interengagement desdits premier et deuxième éléments 13, 14 pour désaccoupler mécaniquement ledit organe de commande 7 du couvercle 30 ou de l'élément de verrouillage 31, de sorte que le déplacement de l'organe de commande 7 de sa position de fermeture vers sa position d'ouverture n'entraîne pas de déplacement relatif du couvercle 30 relativement à l'élément de verrouillage 31.

Avantageusement, la configuration inactive, qui correspond à l'état débrayé du dispositif de transmission, permet donc de ne pas communiquer au verrou 11 les efforts impartis manuellement à l'organe de commande 7, ce qui évite toute sollicitation mécanique intempestive du verrou 11 susceptible de détériorer ce dernier.

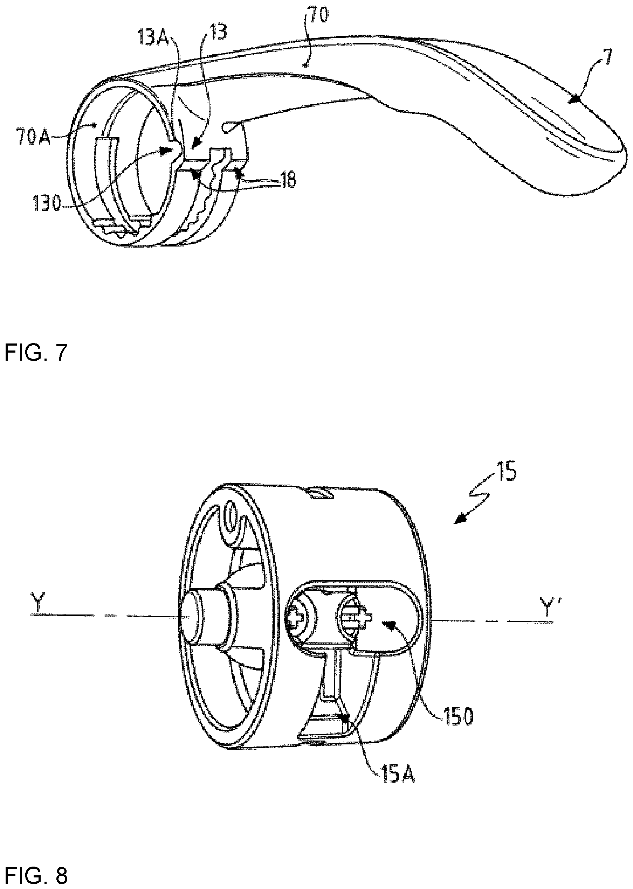

Dans le mode de réalisation illustré aux figures, le dispositif de transmission précité comprend une pièce de liaison 15 reliée au couvercle 30 et/ou à l'élément de verrouillage 31. De préférence, la pièce de liaison 15 forme un moyeu monté à rotation, selon l'axe Y-Y' de rotation du levier 70, relativement à la traverse d'accostage 310. La liaison mécanique entre ladite pièce de liaison 15 et le couvercle 3 est dans ce cas avantageusement réalisé au moyen de la biellette 9 dont une première extrémité est reliée à pivotement au moyeu formant la pièce de liaison 15, tandis que l'autre extrémité est reliée à pivotement au couvercle 9 par l'intermédiaire de la pièce d'attache 10 comme évoqué précédemment. Dans le mode de réalisation avantageux illustré aux figures, l'organe de commande 7 est monté à rotation autour du moyeu 15 par l'intermédiaire d'une bague 70A entourant de façon ajustée le moyeu 15 pour tourner en glissant autour de ce dernier, selon l'axe de rotation Y-Y'. Le levier 70 est avantageusement attaché à ladite bague 70A, et de façon encore plus préférentielle vient de matière avec cette dernière, pour former avec elle une pièce unitaire d'un seul tenant comme illustré à la figure 7. Avantageusement, le premier élément d'accouplement 13 comprend une gâche 13A portée, directement ou indirectement, par l'organe de commande 7. Dans ce mode de réalisation préférentiel, le deuxième élément d'accouplement 14 comprend quant à lui un pêne 14A porté, directement ou indirectement, par ladite pièce de liaison 15. Ledit pêne 14A est avantageusement monté mobile relativement à la pièce de liaison 15 entre une position déployée (illustré aux figures) de rappel élastique correspondant à la configuration active ainsi qu'à la configuration embrayée, dans laquelle le pêne 14A peut s'insérer dans ladite gâche 13A pour inhiber la faculté de déplacement de l'organe de commande 7 relativement à la pièce de liaison 15, et une position rétractée (non illustrée) correspondant à la configuration inactive et à la configuration débrayée, dans laquelle l'organe de commande 7 peut se déplacer relativement à la pièce de liaison 15. Par exemple, conformément au mode de réalisation illustré aux figures, la bague 70A est conformée localement pour former un logement d'accueil 130 dudit pêne 14A en position déployée, ledit logement 130 correspondant à ladite gâche 13A. Le pêne 14A assure ainsi, en position déployée, une liaison mécanique entre la bague 70A et la pièce de liaison 15, qui permet d'entraîner la rotation de ladite pièce de liaison 15 par déplacement rotatif du levier 70 solidaire de la bague 70A.

Comme illustré, le pêne est par exemple formé par un pion monté à coulissement radial dans une cavité 150 débouchant à la surface du moyeu formant pièce de liaison 15, un ressort de rappel 14B étant interposé entre le fond de la cavité 150 et le pêne 14A pour repousser ce dernier en position déployée. En configuration embrayée, la cavité 150 est disposée en regard du logement d'accueil 130 de façon que le pêne 14A émergeant hors de la cavité 150 s'insère également dans le logement d'accueil 130. L'exercice, sur le levier 70, d'un effort d'ouverture suffisant alors que le dispositif de sécurité à l'ouverture 5 bloque l'organe de commande 7 permet, grâce à la forme particulière du pêne 14A qui présente avantageusement une face inclinée, de repousser le pêne 14A vers l'intérieur de la cavité 150, entraînant ainsi le retrait du pêne 14A hors du logement d'accueil 130. Ce retrait entraîne le désaccouplement en rotation de la bague 70A portant le levier 70 et du moyeu formant pièce de liaison 15.

De préférence, le verrou 11 coopère, en position de verrouillage, avec une forme complémentaire 15A portée par le moyeu 15 pour bloquer la rotation dudit moyeu dans le sens de l'ouverture et maintenir ainsi le levier 70 en position de fermeture ou au voisinage de cette dernière, et l'empêchant de gagner la position d'ouverture.

De préférence, le dispositif de sécurité à l'ouverture 5 comprend un organe de rappel élastique, formé par exemple par un ressort 50, qui rappelle le verrou 11 en position de verrouillage. De préférence, au moins l'un desdits chaine cinématique et/ou organe de commande 7 est conçu pour repousser ledit verrou 11 en position de déverrouillage, le cas échéant à l'encontre de la force de rappel exercé par l'organe de rappel élastique 50, en réponse au déplacement de l'organe de commande 7 de sa position de fermeture à sa position d'ouverture lorsque la pression régnant dans l'enceinte est en deçà de ladite valeur de sécurité prédéterminée. Dans le mode de réalisation préférentiel illustré aux figures, le moyeu formant la pièce de liaison 15 joue le rôle d'une came qui lorsqu'elle tourne dans le sens de l'ouverture repousse le verrou 11 en dehors de sa position de verrouillage dans laquelle le verrou 11 engage la surface complémentaire 15A. Le verrou 11 est avantageusement monté sur un chariot 16 coulissant selon un axe Z-Z' perpendiculaire à la fois à l'axe X-X' et à l'axe Y-Y', parallèlement à la direction générale d'extension longitudinale de la traverse 310. Le chariot 16 est avantageusement pourvu d'une lumière 17 qui, lorsque le verrou 11 occupe sa position de déverrouillage, se trouve au droit du doigt de sécurité 12, en alignement vertical avec ce dernier, afin de permettre à une conformation de verrouillage 120 portée par le doigt de sécurité 12, de pénétrer dans une portion localisée de la lumière 17, formant une ouverture de forme complémentaire à celle de la conformation de verrouillage 12A, pour réaliser ainsi un interverrouillage des doigt de sécurité 12 et verrou 11. De préférence, la conformation de verrouillage 120 portée par le doigt de sécurité 12 est formée par une portion de section élargie dudit doigt de sécurité 12, dont le diamètre est avantageusement légèrement inférieur à celui du diamètre de la portion de lumière 17 formant logement complémentaire, de façon à réaliser un emboîtement ajusté de la conformation de verrouillage 120 dans le logement en question, pour sensiblement limiter, voire empêcher, tout mouvement relatif du verrou 11 relativement au doigt de sécurité 12 lorsque ce dernier occupe sa position haute. Une telle conception correspond à celle décrite en détail dans le document WO-2017/198815, en relation avec le mode de réalisation des figures 1 à 10 décrit dans ce document, dont le contenu est incorporé par référence.

Conformément à l'invention, au moins l'un desdits chaîne cinématique et organe de commande 7 inclut une portion prédéfinie à rupture programmée 18 conçue pour se rompre en réponse à l'application, sur ledit organe de commande 7 bloqué par le dispositif de sécurité à l'ouverture 5 et ainsi empêché par ce dernier d'atteindre sa position d'ouverture, d'un effort contraignant ledit organe de commande 7 vers sa position d'ouverture, ledit effort présentant une première intensité prédéterminée. La rupture de ladite portion prédéfinie à rupture programmée 18 empêche ainsi l'ouverture de l'enceinte.

En d'autres termes, la portion prédéfinie à rupture programmée 18 est conçue pour se casser, c'est-à-dire se briser de manière irréversible, lorsqu'un effort contraignant l'organe de commande 7 à partir de sa position de fermeture vers sa position d'ouverture est exercé sur ledit organe de commande 7 avec une intensité supérieure ou égale à ladite première intensité prédéterminée. Cela signifie que si un utilisateur force sur l'organe de commande 7 pour tenter d'ouvrir l'enceinte de cuisson alors que la pression au sein de cette dernière atteint ou excède la valeur de sécurité prédéterminée, occasionnant ainsi le blocage de l'organe de commande 7 par le dispositif de sécurité d'ouverture 5, les efforts soumis manuellement à l'organe de commande 7 dans le sens de l'ouverture ne sont plus transmis au couvercle 30 et/ou à l'élément de verrouillage 31, grâce à la rupture de la portion prédéfinie à rupture programmée 18. Cette sécurité ultime, obtenue par une détérioration définitive de la portion prédéfinie à rupture programmée 18, rend l'organe de commande 7 inopérant. Cette mesure technique permet d'éviter que ne soit appliqué de manière intempestive sur des pièces sensibles de la chaîne cinématique ou du dispositif de sécurité 5 des efforts susceptibles de déformer plastiquement ou détériorer les pièces en question, ce qui pourrait entraîner un phénomène d'échappement brutal de vapeur dangereux pour l'utilisateur.

La première intensité prédéterminée est avantageusement choisie pour que la portion prédéfinie à rupture programmée 18 se brise avant qu'un effort susceptible d'entraîner une déformation plastique irréversible des pièces de la chaîne cinématique ou du dispositif de sécurité à l'ouverture 5 n'ait pu être transmis aux pièces concernées, et en tous les cas avant que l'effort communiqué manuellement à l'organe de commande 7 n'ait pu entraîner un quelconque déplacement relatif du couvercle 30 et de l'élément de verrouillage 31 dans le sens de l'ouverture. En tout état de cause, la portion prédéfinie à rupture programmée 18 est conçue pour se briser, sous l'effet d'un effort manuel exercé sur l'organe de commande 7 bloqué par le dispositif de sécurité à l'ouverture 5 dans ou au voisinage de sa position de fermeture, avant que le dispositif de sécurité à l'ouverture 5 ne soit lui-même détérioré (par exemple déformé plastiquement) ou brisé, c'est-à-dire par exemple avant que le verrou 11 et/ou le doigt de sécurité 12 ne subisse une déformation plastique.

La portion prédéfinie à rupture programmée 18 est donc avantageusement conçue pour qu'une fois sa rupture survenue, le déplacement manuel de l'organe de commande 7 de sa position de fermeture vers sa position d'ouverture ne puisse pas entraîner un quelconque déplacement relatif des couvercle 30 et élément de verrouillage 31 en direction de leur deuxième position relative. Cette sécurité ultime procurée par la portion prédéfinie à rupture programmée 18 garantit qu'en cas de tentative d'ouverture de l'enceinte alors que le niveau de pression en son sein est supérieur ou égal à la valeur de sécurité prédéterminée, l'étanchéité entre le couvercle 3 et la cuve 2 est maintenue, sans expulsion dangereuse de vapeur.

Avantageusement, une fois la portion prédéfinie à rupture programmée 18 rompue, l'organe de commande 7 peut être déplacé manuellement jusque dans sa position d'ouverture mais il est alors découplé, du fait de la rupture de la portion prédéfinie à rupture programmée 18, de la chaîne cinématique, ou bien cette dernière est rompue du fait de la rupture de la portion prédéfinie à rupture programmée 18, empêchant ainsi tout déplacement relatif du couvercle 30 et de l'élément de verrouillage 31 en direction de leur deuxième position relative correspondant à l'ouverture de l'enceinte.

Dans le mode de réalisation illustré aux figures mettant en œuvre une chaîne cinématique débrayable, ladite chaîne cinématique est conçue pour passer automatiquement de sa configuration embrayée à sa configuration débrayée en réponse à l'application, sur l'organe de commande 7 bloqué en position de fermeture (ou au voisinage de cette dernière) par ledit dispositif de sécurité à l'ouverture 5, d'un effort présentant une deuxième intensité prédéterminé contraignant ledit organe de commande 7 vers sa position d'ouverture. Dans ce cas, ladite première intensité prédéterminée (correspondant à la rupture de la portion prédéfinie à rupture programmée 18) est avantageusement supérieure à ladite deuxième intensité prédéterminée (correspondant au débrayage). Cela signifie que l'effort d'ouverture à appliquer sur l'organe de commande 7 bloqué en position par le dispositif de sécurité à l'ouverture 5 pour entraîner la rupture de la portion prédéfinie à rupture programmée 18 est supérieur à l'effort de même nature qu'il faut appliquer sur l'organe de commande 7 bloqué en position par le dispositif de sécurité à l'ouverture 5 pour entraîner le débrayage de la chaîne cinématique. Grâce à cette caractéristique, la sécurité ultime procurée par la rupture de la portion prédéfinie à rupture programmée 18 ne se déclenche que si le débrayage de la chaîne cinématique n'a pas fonctionné. Cela permet de ne recourir à cette sécurité ultime que si tous les autres moyens de sécurité, incluant le débrayage, n'ont pas fonctionné.

Dans ce mode de réalisation préférentiel, l'appareil 1 bénéficie au moins d'une triple sécurité à l'ouverture, avec une hiérarchie de déclenchement selon l'ordre chronologique suivant :
- le verrou 11, bloqué en position de verrouillage par le doigt de sécurité 12 en position haute, bloque le levier 70, par l'intermédiaire du moyeu 15 (figure 6) ;
- si un effort est exercé sur le levier 70 avec une intensité suffisante pour repousser le pêne 14A à l'intérieur de la cavité 150, à l'encontre de la force de rappel exercé par le ressort 14B, la chaîne cinématique passe dans son état débrayée autorisant le levier 70 à être déplacé jusqu'en position d'ouverture, sans pour autant entraîner en rotation le moyeu 15, de sorte que le couvercle 30 et l'élément de verrouillage 31 restent immobilisés dans leur première position relative correspondant à la configuration de fermeture ; dans ce cas, la deuxième intensité prédéterminée correspondant au seuil de déclenchement du débrayage est directement fonction de la raideur du ressort 14B qui rappelle le pêne 14A en position déployée.
- si le débrayage ne fonctionne pas, c'est-à-dire que le pêne 14A reste en position déployée, alors le levier 70 peut être légèrement déplacé en direction de sa position d'ouverture à partir de sa position de fermeture, par exemple d'un angle α compris entre 2 et 30°, par exemple compris entre 5 et 20°, jusque dans une configuration de mise en butée du moyeu 15, et plus précisément de la surface 15A du moyeu 15, contre le verrou 11 ; si l'effort d'ouverture exercé sur le levier 70 est poursuivi, et que le pêne 14A reste toujours en position déployée, alors la portion prédéfinie à rupture programmée 18 se brise dès l'atteinte de la première intensité prédéterminée.

Compte tenu de ce qui précède, le débrayage ne peut avantageusement se déclencher que si le verrou 11 bloque en position le moyeu 15, de même que la rupture de la portion prédéfinie à rupture programmée 18 ne peut se déclencher que si la chaîne cinématique est en configuration embrayée.

Il est cependant parfaitement envisageable de recourir à une portion prédéfinie à rupture programmée sans pour autant mettre en œuvre une chaîne cinématique débrayable. Dans ce cas, le niveau intermédiaire de sécurité susceptible d'être procuré par une chaîne cinématique débrayable n'est pas présent.

Comme exposé précédemment, la portion prédéfinie à rupture programmée 18 peut faire partie soit de la chaîne cinématique, soit de l'organe de commande 7, soit à la fois de la chaîne cinématique et de l'organe de commande 7.

Dans le mode de réalisation illustré aux figures, la portion prédéfinie à rupture programmée 18 est disposé au niveau de la gâche 13A, ou au voisinage de cette dernière, de manière à ce qu'une fois ladite portion 18 rompue, la gâche 13A ne soit plus en mesure de coopérer avec le pêne 14A pour inhiber la faculté de déplacement de l'organe de commande 7 relativement à la pièce de liaison 15. Par exemple, la portion prédéfinie à rupture programmée 18 correspond à une portion amincie de la bague 70A contribuant à former, au moins en partie, le logement d'accueil 130 du pêne 14A en position déployée. La rupture de la portion prédéfinie à rupture programmée 18 correspond dans ce cas à une rupture de la paroi de la bague 70A, rupture qui est localisée au niveau ou au voisinage du logement d'accueil 130. Cette rupture localisée permet alors à la bague 70A de se déformer suffisamment pour lui permettre de tourner librement autour du moyeu 15, permettant ainsi au levier 70 de gagner sa position d'ouverture sans pour autant entraîner en rotation le moyeu 15 du fait de la rupture de la portion 18. Dans ce mode de réalisation avantageux, la rupture de la portion prédéfinie à rupture programmée 18 n'entraîne ni détachement de pièces potentiellement dangereux ni dislocation du module ni génération d'éléments contondants susceptibles de blesser l'utilisateur. Au contraire, dans ce mode de réalisation préférentiel, le levier 70 peut simplement tourner autour de son axe Y-Y', comme si le débrayage avait fonctionné, ce qui limite d'éventuels effets anxiogène vis-à-vis de l'utilisateur et permet de conserver l'intégrité de l'appareil, ce qui facilite son transport pour réparation.

L'invention n'est toutefois pas limité à la mise en œuvre d'une portion prédéfinie à rupture programmée 18 disposée au niveau de la gâche 13A, ni à une portion prédéfinie à rupture programmée 18 portée par la bague 70A solidaire du levier 70. Il est par exemple tout à fait envisageable que la portion prédéfinie à rupture programmée 18 soit disposée au niveau de la jonction entre la bague 70A et le levier 70, de façon que lors de la rupture de la zone concernée le levier 70 se détache du moyeu 15 et reste dans la main de l'utilisateur.

Alternativement, la portion prédéfinie à rupture programmée 18 peut être portée par le moyeu formant pièce de liaison 15 et être par exemple positionné au niveau du pêne 14A ou être formé par ce dernier. Dans ce cas, le pêne 14A est conçu pour se briser lorsqu'il subit un effort supérieur à l'effort requis pour son effacement à l'intérieur de la cavité 150. Selon encore une autre alternative, la portion prédéfinie à rupture programmée 18 est disposée au niveau ou au voisinage de la jonction entre la biellette 9 et le moyeu 15, et peut être formée par exemple dans ce cas par une goupille 90 formant l'axe de la biellette reliée au moyeu 15. Dans ce cas, ladite goupille 90 est conçue pour se casser lorsque l'organe de commande 7 est soumis à un effort dans le sens de l'ouverture dont l'intensité excède ladite première intensité prédéterminée. Encore une autre possibilité pourrait consister à ce que le moyeu lui-même se brise localement au niveau ou au voisinage de sa liaison avec la biellette 9, ou à un autre endroit. Bien entendu, l'invention n'est pas limitée aux différentes possibilités exposées ci-avant à titre purement illustratif et non limitatif.

Avantageusement, le verrou 11 comprend un crochet 11A conçu pour retenir, lorsque le verrou 11 est en position de verrouillage (figures 6 et 10), ladite pièce de liaison 15 dans une position correspondant à ladite première position relative desdits couvercle 30 et élément de verrouillage 31. Le recours à un crochet 11A permet d'assurer un ancrage particulièrement ferme entre le moyeu formant pièce de liaison 15 et le verrou 11, grâce à la mise en butée du crochet 11A contre la forme complémentaire 15A ménagée sur le moyeu (cf. figure 8), dont la conformation est conjuguée à celle du crochet 11A. Grâce à cette forme en crochet, l'effort de résistance exercé par le verrou 11 sur le moyeu 15 en réaction à une tentative d'ouverture du levier 70 (figure 10) est accru, grâce notamment à la mise en œuvre de composantes de réaction s'exerçant selon de multiples directions, et notamment selon à la fois la direction horizontale et la direction verticale. Grâce à cet ancrage optimisé obtenu par la forme en crochet du verrou 11, tout déplacement intempestif du couvercle 30 relativement à l'élément de verrouillage 31, en direction de la configuration d'ouverture, peut être évité même si un effort manuel d'ouverture est exercé sur l'organe de commande 7 à partir de sa position de fermeture. La fiabilité de l'ancrage ainsi obtenu entre le moyeu 15 et le verrou 11 permet de garantir que le débrayage et/ou la rupture de la portion prédéfinie à rupture programmée 18 se produiront bien avant tout déplacement intempestif du couvercle 30 relativement à l'élément de verrouillage 31.

Un exemple de fonctionnement de l'appareil 1 conforme au mode de réalisation illustré aux figures est exposé dans ce qui suit.

Tout d'abord, l'utilisateur place dans la cuve 2 les aliments à cuire, accompagnés d'un liquide de cuisson (eau par exemple), puis rapporte sur la cuve 2 le sous-ensemble de couvercle 3 avec l'organe de commande 7 en position d'ouverture (figure 5), de façon à faire reposer la traverse d'accostage 310 sur le bord rentrant 22C avec le couvercle 30 suspendu à l'intérieur de la cuve 2 (figure 4). L'utilisateur exerce alors un effort manuel de verrouillage sur le levier 70, pour ramener ce dernier dans une position de fermeture dans laquelle le levier 70 est rabattu sensiblement à l'horizontale contre une gouttière 19 solidaire de la traverse 310. La gouttière 19 en question est plus courte que le levier 70 et fait office de poignée fixe de soulèvement. Le déplacement du levier 70 de sa position d'ouverture (figures 4 et 5) à sa position de fermeture (figures 1 et 2) entraîne concomitamment un déplacement vertical ascendant du couvercle 30 qui vient se plaquer et se déformer contre et sous le bord rentrant 22C, de sorte que l'enceinte de cuisson se retrouve en configuration de fermeture étanche, prête à monter en pression. A ce stade, le doigt de sécurité 12 est en position basse, comme illustré à la figure 6, car la pression régnant au sein de l'enceinte n'excède pas la valeur de sécurité prédéterminée. L'autocuiseur 1 est alors soumis à une source de chauffe, en l'occurrence externe et indépendante (plaque de cuisson par exemple), qui va entraîner la montée progressive du niveau de pression au sein de l'enceinte. Dès que la valeur de la pression au sein de l'enceinte atteint la valeur de sécurité prédéterminée, le doigt de sécurité 12 s'élève verticalement pour atteindre sa position haute dans laquelle il bloque le chariot 16 dans une position correspondant à la position de verrouillage du verrou 11. L'utilisateur tente alors d'ouvrir l'appareil 1, alors que ce dernier est sous pression (pression interne excédant la valeur de sécurité prédéterminée). Pour cela, il exerce sur le levier 70 un effort d'ouverture contraignant le levier 70 vers sa position d'ouverture. Sous l'effet de cet effort intempestif d'ouverture, le levier 70 se déplace légèrement selon une course angulaire α (figure 10) mais ne peut être emmené jusqu'en position d'ouverture du fait de l'action de blocage exercé par le crochet 11A du verrou 11 sur la conformation correspondante 15A du moyeu 15. Si l'utilisateur, en dépit de la résistance rencontrée du fait de l'effort de blocage exercé par le verrou 11, persiste à exercer un effort d'ouverture sur le levier 70, en forçant sur ce dernier, alors le pêne 14A va s'effacer à l'intérieur du logement 150 ménagé dans le moyeu 15, dès que l'intensité de l'effort d'ouverture exercée sur le levier 70 excède ladite deuxième intensité prédéterminée. Cela permet un débrayage de la chaîne cinématique autorisant un déplacement libre du levier 70 jusque dans sa position d'ouverture, sans pour autant que le couvercle 30 ne soit libéré et redescende dans la cuve 2. Dans l'hypothèse où le pêne 14A est bloquée en position déployée et ne peut se rétracter dans le logement 150 même lorsque l'intensité excède ladite deuxième intensité prédéterminée, la sécurité ultime procurée par la portion prédéfinie à rupture programmée 18 va pouvoir protéger l'utilisateur. En effet, dès que l'effort intempestif d'ouverture exercé par ce dernier sur le levier 70 présente une intensité supérieure à ladite première intensité prédéterminée, la portion prédéfinie à rupture programmée 18 va se rompre, c'est-à-dire que la bague 70A va se briser au niveau du logement 130. Grâce à cette rupture de la bague 70A, la gâche 13A formé par le logement 130 n'est plus fonctionnelle et peut être dégagée du pêne 14A, de sorte que le levier 70 peut être librement amené jusque dans sa position d'ouverture sans pour autant entraîner concomitamment en rotation le moyeu 15. L'appareil 1 devient alors inutilisable, mais la pression au sein de l'enceinte pourra chuter naturellement sans risque de libération soudaine de vapeur, protégeant ainsi l'utilisateur. Il suffit alors à l'utilisateur de ramener son appareil 1 fermé à un service après-vente qui pourra remplacer la pièce monobloc formant à la fois le levier 70 et la bague 70A (illustrée à la figure 7).

L'invention permet ainsi de procurer de façon extrêmement simple, efficace et bon marché une sécurité ultime qui améliore grandement la sécurité d'utilisation de l'appareil 1.

## Revendications

1. Appareil (1) de cuisson d'aliments sous pression comprenant au moins une cuve (2) et un sous-ensemble de couvercle (3) destiné à être associé à la cuve (2) pour former avec cette dernière une enceinte de cuisson capable de monter en pression, ledit sous-ensemble de couvercle (3) comprenant au moins :
- un couvercle (30) et un élément de verrouillage (31) mobiles l'un par rapport à l'autre entre une première position relative et une deuxième position relative correspondant respectivement à une configuration de fermeture et d'ouverture de l'enceinte,
- un organe de commande (7) déplaçable manuellement d'une position de fermeture vers une position d'ouverture,
- une chaîne cinématique pour transformer le déplacement dudit organe de commande (7) de sa position de fermeture vers sa position d'ouverture en déplacement relatif desdits couvercle (30) et élément de verrouillage (31) de ladite première position relative vers ladite deuxième position relative,
- un dispositif de sécurité à l'ouverture (5) conçu pour bloquer ledit organe de commande (7) dès que la pression régnant dans l'enceinte atteint une valeur de sécurité prédéterminée, afin d'empêcher ledit organe de commande (7) d'atteindre sa position d'ouverture,
ledit appareil (1) étant **caractérisé en ce qu'**au moins l'un desdits chaîne cinématique et organe (7) de commande inclut une portion prédéfinie à rupture programmée (18) conçue pour se rompre en réponse à l'application, sur ledit organe de commande (7) bloqué par ledit dispositif de sécurité à l'ouverture (5), d'un effort présentant une première intensité prédéterminée contraignant ledit organe de commande (7) vers sa position d'ouverture, la rupture de ladite portion prédéfinie à rupture programmée (18) empêchant ainsi l'ouverture de l'enceinte.

2. Appareil (1) selon la revendication précédente **caractérisé en ce que** ladite chaîne cinématique est débrayable, de façon à évoluer de manière réversible entre d'une part une configuration embrayée, dans laquelle elle transforme le déplacement dudit organe de commande (7) de sa position de fermeture vers sa position d'ouverture en déplacement relatif desdits couvercle (30) et élément de verrouillage (31) de ladite première position relative vers ladite deuxième position relative, et d'autre part une configuration débrayée dans laquelle elle autorise le déplacement dudit organe de commande (7) de sa position de fermeture vers sa position d'ouverture sans toutefois le transformer en déplacement relatif desdits couvercle (30) et élément de verrouillage (31).

3. Appareil (1) selon la revendication précédente **caractérisé en ce que** ladite chaîne cinématique est conçue pour passer automatiquement de sa configuration embrayée à sa configuration débrayée en réponse à l'application, sur ledit organe de commande (7) bloqué par ledit dispositif de sécurité à l'ouverture (5), d'un effort (7) présentant une deuxième intensité prédéterminée contraignant ledit organe de commande (7) vers sa position d'ouverture, ladite première intensité prédéterminée étant supérieure à ladite deuxième intensité prédéterminée.

4. Appareil (1) selon l'une quelconque des revendications précédentes **caractérisé en ce que** ladite chaîne cinématique est conçue pour retourner automatiquement dans sa configuration embrayée à partir de sa configuration débrayée lorsque ledit organe de commande (7) retourne en position de fermeture.

5. Appareil (1) selon l'une quelconque des revendications précédentes **caractérisé en ce que** ladite chaîne cinématique comprend un dispositif de transmission débrayable qui inclut lui-même un premier élément d'accouplement (13) relié à l'organe de commande manuel (7) et un deuxième élément d'accouplement (14) relié au couvercle (30) et/ou audit élément de verrouillage (31), l'un au moins desdits premier et deuxième élément d'accouplement évoluant entre d'une part une configuration active correspondant à la configuration embrayée et permettant un interengagement desdits premier et deuxième organes d'accouplement (13, 14) pour accoupler mécaniquement l'organe de commande manuel (7) avec le couvercle (30) et/ou l'élément de verrouillage (31), et d'autre part une configuration inactive empêchant l'interengagement desdits premier et deuxième éléments (13, 14) pour désaccoupler mécaniquement ledit organe de commande (7) du couvercle (30) ou de l'élément de verrouillage (31).

6. Appareil (1) selon la revendication précédente **caractérisé en ce que** ledit dispositif de transmission comprend une pièce de liaison (15) reliée au couvercle (30) et/ou à l'élément de verrouillage (31), ledit premier élément d'accouplement (13) comprenant une gâche (13A) portée par l'organe de commande (7) tandis que le deuxième élément d'accouplement (14) comprend un pêne (14A) portée par ladite pièce de liaison (15) et monté mobile relativement à cette dernière entre une position déployée de rappel élastique correspondant à la configuration embrayée, dans laquelle le pêne (14A) peut s'insérer dans ladite gâche (13A) pour inhiber la faculté de déplacement de l'organe de commande (7) relativement à la pièce de liaison (15), et une position rétractée correspondant à la configuration débrayée, dans laquelle l'organe de commande (7) peut se déplacer relativement à la pièce de liaison (15).

7. Appareil (1) selon la revendication précédente **caractérisé en ce que** ladite portion prédéfinie à rupture programmée (18) est disposée au niveau de la gâche (13A) ou au voisinage de cette dernière, de manière à ce qu'une fois ladite portion rompue, la gâche ne soit plus en mesure de coopérer avec le pêne (14A) pour inhiber la faculté de déplacement de l'organe de commande (7) relativement à la pièce de liaison (15).

8. Appareil (1) selon la revendication 6 ou 7 **caractérisé en ce que** ledit élément de verrouillage (31) comprend une traverse d'accostage (310) qui est destinée à être rapportée sur la cuve (2) de façon à reposer sur et contre cette dernière, ledit couvercle (30) étant suspendu à ladite traverse d'accostage (310) par l'intermédiaire de ladite chaîne cinématique, ladite traverse d'accostage (310) embarquant ledit organe de commande (7), lequel est monté à rotation relativement à ladite traverse d'accostage (310), ladite pièce de liaison (15) formant un moyeu monté à rotation relativement à la traverse d'accostage (310).

9. Appareil (1) selon la revendication précédente **caractérisé en ce que** ledit organe de commande (7) est monté à rotation autour du moyeu par l'intermédiaire d'une bague (70A) entourant de façon ajustée le moyeu, ladite bague (70A) étant conformé localement pour former un logement d'accueil (130) dudit pêne (14A) en position déployée correspondant à ladite gâche (13A).

10. Appareil (1) selon la revendication 8 ou 9 **caractérisé en ce que** ladite cuve (2) comprend une ouverture délimitée par un bord rentrant (2C), ledit sous-ensemble de couvercle (3) étant conçu pour que dans ladite configuration d'ouverture, ladite traverse d'accostage (310) repose sur la cuve (2) au-dessus du bord rentrant (2C) tandis que le couvercle (30) suspendu à la traverse (310) se trouve dans la cuve (2), sous ledit bord rentrant (2C) et à distance de ce dernier, et pour qu'en configuration de fermeture, la traverse d'accostage (310) repose sur la cuve (2) au-dessus du bord rentrant (2C) tandis que le couvercle (30) suspendu à la traverse (310) se trouve dans la cuve (2), sous ledit bord rentrant (2C) et plaqué contre ce dernier pour permettre la montée en pression de l'enceinte de cuisson ainsi formée.

11. Appareil (1) selon l'une quelconque des revendications précédentes **caractérisé en ce que** ledit dispositif de sécurité à l'ouverture (5) comprend un verrou (11) mobile entre une position de verrouillage dans laquelle il empêche lesdits couvercle (30) et élément de verrouillage (31) de gagner ladite deuxième position relative correspondant à la configuration d'ouverture de l'enceinte et au moins une position de déverrouillage autorisant lesdits couvercle (30) et élément de verrouillage (31) à gagner ladite deuxième position relative.

12. Appareil (1) selon la revendication précédente **caractérisé en ce que** ledit dispositif de sécurité à l'ouverture (5) comprend un organe de rappel élastique (50) qui rappelle ledit verrou (11) en position de verrouillage.

13. Appareil (1) selon la revendication 11 ou 12 **caractérisé en ce qu'**au moins l'un desdits chaîne cinématique et/ou organe de commande (7) est conçu pour repousser ledit verrou (11) en position de déverrouillage en réponse au déplacement de l'organe de commande (7) de sa position de fermeture vers sa position d'ouverture lorsque la pression régnant dans l'enceinte est en-deçà de ladite valeur de sécurité prédéterminée.

14. Appareil (1) selon l'une quelconque des revendications 11 à 13 **caractérisé en ce que** ledit dispositif de sécurité à l'ouverture (5) comprend un doigt de sécurité (12) sensible à la pression régnant à l'intérieur de l'enceinte, ledit doigt de sécurité (12) étant mobile entre d'une part une position basse dans laquelle il est rappelé lorsque le niveau de pression dans l'enceinte est inférieur à ladite valeur de sécurité prédéterminée, et d'autre part une position haute qu'il occupe dès que le niveau de pression dans l'enceinte atteint ladite valeur de sécurité prédéterminée, ledit doigt de sécurité (12) coopérant en position haute avec ledit verrou (11) pour interdire à ce dernier de quitter sa position de verrouillage.

15. Appareil (1) selon l'une quelconque des revendications précédentes **caractérisé en ce que** le couvercle (30) est un couvercle déformable susceptible d'évoluer entre une configuration géométrique de repos permettant l'introduction du couvercle (30) dans la cuve (2) et correspondant à la configuration d'ouverture de l'enceinte, et une configuration géométrique déformée correspondant à la configuration de fermeture de l'enceinte et permettant au couvercle (30) de venir en contact sensiblement étanche contre la cuve (2) pour permettre la montée en pression de l'enceinte.

## Patentansprüche

1. Vorrichtung (1) zum Druckgaren von Lebensmitteln mit mindestens einem Behälter (2) und einer Deckelunterbaugruppe (3), die zur Verbindung mit dem Behälter bestimmt ist, um mit diesem eine Garkammer zu bilden, die in der Lage ist, den Druck zu erhöhen, wobei die Deckelunterbaugruppe (3) mindestens umfasst:
- einen Deckel (30) und ein Verriegelungselement (31), die relativ zueinander zwischen einer ersten Relativposition und einer zweiten Relativposition, die jeweils einer Schließ- und Öffnungskonfiguration des Gehäuses entsprechen, bewegbar sind,
- ein Steuerelement (7), das manuell von einer geschlossenen Position in eine offene Position bewegt werden,
- eine kinematische Kopplung zum Umsetzen der Bewegung des Steuerelements (7) aus seiner geschlossenen Position in seine offene Position in eine relative Bewegung der Abdeckung (30) und des Verriegelungselements (31) aus der ersten relativen Position in die zweite relative Position,
- eine Sicherheitseinrichtung für die Öffnung (5), die dazu bestimmt ist, das Steuerorgan (7) zu blockieren, sobald der Druck im Gehäuse einen vorbestimmten Sicherheitswert erreicht, um zu verhindern, dass das Steuerorgan (7) seine offene Position erreicht,
wobei die Vorrichtung (1) **dadurch gekennzeichnet ist, dass** mindestens eines von der kinematischen Kopplung und dem Steuerelement (7) einen vordefinierten Sollbruchabschnitt (18) aufweist, der dazu bestimmt ist, in Reaktion auf das Aufbringen einer Kraft auf das durch die Sicherheitseinrichtung für die Öffnung (5) blockierte Steuerelement (7) mit einer ersten vorbestimmten Höhe, die das Steuerelement (7) in seine Öffnungsposition zwingt, zu brechen, wobei durch das Brechen des vordefinierten Sollbruchabschnitts (18) das Öffnen des Gehäuses verhindert ist.

2. Vorrichtung (1) nach dem vorhergehenden Anspruch, **dadurch gekennzeichnet, dass** die kinematische Kopplung entkoppelt werden kann, um sich reversibel zwischen einerseits einer eingekuppelten Konfiguration, in der sie die Verschiebung des Steuerorgans (7) aus seiner geschlossenen Position in seine offene Position in eine relative Verschiebung des Deckels (30) und des Verriegelungselements (31) aus der ersten relativen Position in die zweite relative Position umwandelt, und andererseits einer entkoppelten Konfiguration zu verändern, in der sie die Verschiebung des Steuerorgans (7) aus seiner geschlossenen Position in seine offene Position zulässt, ohne sie jedoch in eine relative Verschiebung des Deckels (30) und des Verriegelungselements (31) aus der zweiten relativen Position umzuwandeln.

3. Vorrichtung (1) nach dem vorhergehenden Anspruch, **dadurch gekennzeichnet, dass** die kinematische Kopplung so ausgelegt ist, dass sie automatisch von ihrer eingekuppelten Konfiguration in ihre ausgekuppelte Konfiguration übergeht, wenn auf das durch die Öffnungssicherungsvorrichtung (5) blockierte Steuerelement (7) eine Kraft mit einer zweiten vorbestimmten Höhe ausgeübt wird, die das Steuerelement (7) in seine Öffnungsposition drängt, wobei die erste vorbestimmte Höhe größer als die zweite vorbestimmte Höhe ist.

4. Vorrichtung (1) nach einem der vorhergehenden Ansprüche, **dadurch gekennzeichnet, dass** der Antriebsstrang derart ausgebildet ist, dass er aus seiner ausgerückten Konfiguration automatisch in seine eingerückte Konfiguration zurückkehrt, wenn das Steuerelement (7) in die geschlossene Position zurückkehrt.

5. Vorrichtung (1) nach einem der vorhergehenden Ansprüche, **dadurch gekennzeichnet, dass** die kinematische Kopplung eine auskuppelbare Übertragungsvorrichtung umfasst, die ihrerseits ein erstes Kupplungselement (13), das mit dem manuellen Steuerelement (7) verbunden ist, und ein zweites Kupplungselement (14), das mit dem Deckel (30) und/oder dem Verriegelungselement (31) verbunden ist, umfasst, wobei mindestens eines der ersten und zweiten Kupplungselemente (13, 14), das sich zwischen einerseits einer aktiven Konfiguration, die der eingerückten Konfiguration entspricht, bewegt und ein Ineinandergreifen des ersten und des zweiten Kupplungselements (13, 14) zum mechanischen Kuppeln des manuellen Steuerelements (7) mit dem Deckel (30) und/oder dem Verriegelungselement (31) ermöglicht, und andererseits einer inaktiven Konfiguration, die das Ineinandergreifen des ersten und des zweiten Elements (13, 14) zum mechanischen Entkuppeln des Steuerglieds (7) von dem Deckel (30) oder von dem Verriegelungselement (31) verhindert, bewegt.

6. Vorrichtung (1) nach dem vorhergehenden Anspruch, **dadurch gekennzeichnet, dass** die Übertragungseinrichtung ein mit dem Deckel (30) und/oder dem Verriegelungselement (31) verbundenes Verbindungsstück (15) umfasst, wobei das erste Kupplungselement (13) ein von dem Steuerelement (7) getragenes Schloss (13A) umfasst, während das zweite Kupplungselement (14) einen von dem Verbindungsstück (15) getragenen Riegel (14A) aufweist, der relativ zu diesem beweglich zwischen einer ausgefahrenen elastischen Rückstellposition, die der eingerasteten Konfiguration entspricht, in der der Riegel (14A) in das Schloss (13A) eingeführt werden kann, um die Beweglichkeit des Steuerelements (7) relativ zu dem Verbindungsstück (15) aufzuheben, und einer eingezogenen Position, die der Außereingriffskonfiguration entspricht, in der sich das Steuerelement (7) relativ zu dem Verbindungsstück (15) bewegen kann, angebracht ist.

7. Vorrichtung (1) nach dem vorhergehenden Anspruch, **dadurch gekennzeichnet, dass** der vordefinierte Sollbruchabschnitt (18) am oder in der Nähe des Schlosses (13A) angeordnet ist, so dass das Schloss nach Brechen des Abschnitts nicht mehr mit dem Riegel (14A) zusammenwirken kann, um die Beweglichkeit des Steuerelements (7) relativ zu dem Verbindungsstück (15) zu blockieren.

8. Vorrichtung (1) nach Anspruch 6 oder 7, **dadurch gekennzeichnet, dass** das Verriegelungselement (31) eine Andocktraverse (310) umfasst, die dazu bestimmt ist, an dem Behälter (2) so angebracht zu werden, dass sie auf und an diesem anliegt, wobei der Deckel (30) über die kinematische Kopplung an der Andocktraverse (310) aufgehängt ist, wobei die Andocktraverse (310) das Steuerelement (7) trägt, das relativ zur Andocktraverse (310) drehbar gelagert ist, wobei das Verbindungsstück (15) eine relativ zur Andocktraverse (310) drehbar gelagerte Nabe bildet.

9. Vorrichtung (1) nach dem vorhergehenden Anspruch, **dadurch gekennzeichnet, dass** das Steuerelement (7) mittels eines Rings (70A), der die Nabe passgenau umgibt, drehbar um die Nabe gelagert ist, wobei der Ring (70A) örtlich so geformt ist, dass er ein Gehäuse (130) zur Aufnahme des Riegels (14A) in der ausgefahrenen Stellung entsprechend des Schlosses (13A) bildet.

10. Vorrichtung (1) nach Anspruch 8 oder 9, **dadurch gekennzeichnet, dass** der Behälter (2) eine Öffnung aufweist, die durch eine einspringende Kante (2C) begrenzt ist, wobei die Deckel-Unterbaugruppe (3) so angepasst ist, dass sich in der Öffnungskonfiguration die Andocktraverse (310) auf dem Behälter (2) oberhalb der einspringenden Kante (2C) abstützt, während sich der an der Traverse (310) aufgehängte Deckel (30) innerhalb des Behälters (2) unter dem einspringenden Rand (2C) und in einem Abstand von diesem angeordnet ist, so dass in der geschlossenen Konfiguration die Andocktraverse (310) auf dem Behälter (2) oberhalb des einspringenden Randes (2C) ruht, während der an der Traverse (310) aufgehängte Deckel (30) in dem Behälter (2) unter dem einspringenden Rand (2C) angeordnet ist und gegen diesen gedrückt wird, um den Druckaufbau der so gebildeten Kochkammer zu ermöglichen.

11. Vorrichtung (1) nach einem der vorhergehenden Ansprüche, **dadurch gekennzeichnet, dass** die Sicherheitseinrichtung für die Öffnung (5) eine Verriegelung (11) umfasst, die zwischen einer Verriegelungsposition, in der sie verhindert, dass der Deckel (30) und das Verriegelungselement (31) die zweite relative Position erreichen, die der Öffnungskonfiguration des Gehäuses entspricht, und mindestens einer Entriegelungsposition, die es dem Deckel (30) und dem Verriegelungselement (31) ermöglicht, die zweite relative Position zu erreichen, beweglich ist.

12. Vorrichtung (1) nach dem vorhergehenden Anspruch, **dadurch gekennzeichnet, dass** die Sicherheitseinrichtung für die Öffnung (5) ein elastisches Rückstellelement (50) umfasst, das die Verriegelung (11) in die Verriegelungsposition zurückführt.

13. Vorrichtung (1) nach Anspruch 11 oder 12, **dadurch gekennzeichnet, dass** mindestens eines von dem Antriebsstrang und/oder dem Steuerelement (7) so ausgelegt ist, dass es die Verriegelung (11) als Reaktion auf die Verschiebung des Steuerelements (7) aus seiner geschlossenen Position in seine offene Position zurück in die entriegelte Position schiebt, wenn der in dem Gehäuse herrschende Druck unter dem vorgegebenen Sicherheitswert liegt.

14. Vorrichtung (1) nach einem der Ansprüche 11 bis 13, **dadurch gekennzeichnet, dass** die Sicherheitsvorrichtung für die Öffnung (5) einen Sicherheitsfinger (12) umfasst, der auf den im Inneren des Gehäuses herrschenden Druck anspricht, wobei der Sicherheitsfinger (12) zwischen einerseits einer unteren Position, in die er zurückgestellt wird, wenn das Druckniveau im Gehäuse kleiner als der vorbestimmte Sicherheitswert ist, und andererseits einer oberen Position, die er einnimmt, sobald das Druckniveau im Gehäuse den vorbestimmten Sicherheitswert erreicht, beweglich ist, wobei der Sicherheitsfinger (12) in der oberen Position mit der Verriegelung (11) zusammenwirkt um zu verhindern, dass letztere ihre Verriegelungsposition verlässt.

15. Vorrichtung (1) nach einem der vorhergehenden Ansprüche, **dadurch gekennzeichnet, dass** der Deckel (30) ein verformbarer Deckel ist, der sich zwischen einer geometrischen Ruhekonfiguration, die das Einführen des Deckels (30) in den Behälter (2) ermöglicht und der Öffnungskonfiguration des Gehäuses entspricht, und einer verformten geometrischen Konfiguration, die der Schließkonfiguration des Gehäuses entspricht und es dem Deckel (30) ermöglicht, in einen im Wesentlichen dichten Kontakt mit dem Behälter (2) zu kommen, um die Druckbeaufschlagung des Gehäuses zu ermöglichen, verändern kann.

## Claims

1. A food pressure cooking appliance (1) comprising at least a bowl (2) and a lid sub-unit (3) intended to be combined with the bowl (2) to form with the latter a cooking chamber capable of rising in pressure, said lid sub-unit (3) comprising at least:
- a lid (30) and a locking element (31) mobile relative to each other between a first relative position and a second relative position corresponding to a closed and an open configuration, respectively, of the chamber,
- a control member (7) manually movable from a closing position to an opening position,
- a kinematic chain to transform the displacement of said control member (7) from its closing position to its opening position into a relative displacement of said lid (30) and locking element (31) from said first relative position to said second relative position,
- an opening safety device (5) designed to block said control member (7) as soon as the pressure inside the chamber reaches a predetermined safety value, in order to prevent said control member (7) from reaching its opening position,
said appliance (1) being **characterized in that** at least one of said kinematic chain and control member (7) includes a predefined shear portion (18) designed to break in response to the application, on said control member (7) blocked by said opening safety device (5), of an effort having a first predetermined intensity stressing said control member (7) towards its opening position, the breaking of said predefined shear portion (18) hence preventing the opening of the chamber.

2. The appliance (1) according to the preceding claim, **characterized in that** said kinematic chain is disengageable, so as to evolve reversibly between, on the one hand, an engaged configuration, in which it transforms the displacement of said control member (7) from its closing position to its opening position into a relative displacement of said lid (30) and locking element (31) from said first relative position to said second relative position, and on the other hand, a disengaged configuration in which it allows the displacement of said control member (7) from its closing position to its opening position, without thereby transforming it into a relative displacement of said lid (30) and locking element (31).

3. The appliance (1) according to the preceding claim, **characterized in that** said kinematic chain is designed to switch automatically from its engaged configuration to its disengaged configuration in response to the application, to said control member (7) blocked by said opening safety device (5), of an effort (7) having a second predetermined intensity stressing said control member (7) towards its opening position, said first predetermined intensity being higher than said second predetermined intensity.

4. The appliance (1) according to any one of the preceding claims, **characterized in that** said kinematic chain is designed to automatically go back to its engaged configuration from its disengaged configuration when said control member (7) goes back to its closing position.

5. The appliance (1) according to any one of the preceding claims, **characterized in that** said kinematic chain comprises a disengageable transmission device that itself includes a first coupling element (13) connected to the manual control member (7), and a second coupling element (14) connected to the lid (30) and/or to said locking element (31), at least one of said first and second coupling elements evolving between, on the one hand, an active configuration corresponding to the engaged configuration and allowing an inter-engagement of said first and second coupling elements (13, 14) to mechanically couple the manual control member (7) to the lid (30) and/or the locking element (31), and on the other hand, an inactive configuration preventing the inter-engagement of said first and second elements (13, 14) to mechanically uncouple said control member (7) from the lid (30) or the locking element (31).

6. The appliance (1) according to the preceding claim, **characterized in that** said transmission device comprises a connecting part (15) connected to the lid (30) and/or to the locking element (31), said first coupling element (13) comprising a striker (13A) carried by the control member (7), whereas the second coupling element (14) comprises a bolt (14A) carried by said connecting part (15) and mounted mobile with respect to the latter between an elastic-return extended position, corresponding to the engaged configuration, in which the bolt (14A) can be inserted into said striker (13A) to inhibit the faculty of displacement of the control member (7) with respect to the connecting part (15), and a retracted position corresponding to the disengaged configuration, in which the control member (7) can move with respect to the connecting part (15).

7. The appliance (1) according to the preceding claim, **characterized in that** said predefined shear portion (18) is designed to break at the striker (13A) or near the latter, so that, once said portion broken, the striker is no longer able to cooperate with the bolt (14A) to inhibit the faculty of displacement of the control member (7) with respect to the connecting part (15).

8. The appliance (1) according to claim 6 or 7, **characterized in that** said locking element (31) comprises a docking cross-bar (310) that is intended to be placed on the bowl (2) so as to rest on and against the latter, said lid (30) hanging from said docking cross-bar (310) through said kinematic chain, said docking cross-bar (310) bearing said control member (7), which is rotationally mounted with respect to said docking cross-bar (310), said connecting part (15) forming a hub rotationally mounted with respect to the docking cross-bar (310).

9. The appliance (1) according to the preceding claim, **characterized in that** said control member (7) is rotationally mounted about the hub through a ring (70A) fittedly surrounding the hub, said ring (70A) being locally conformed so as to form a housing (130) for receiving said bolt (14A) in the extended position corresponding to said striker (13A).

10. The appliance (1) according to claim 8 or 9, **characterized in that** said bowl (2) comprises an opening delimited by an inwardly-directed rim (2C), said lid sub-unit (3) being designed so that, in said opening configuration, said docking cross-bar (310) rests on the bowl (2) above the inwardly-directed rim (2C), whereas the lid (30) hanging from the docking cross-bar (310) is located in the bowl (2), under the inwardly-directed rim (2C) and remote from the latter, and so that, in the closed configuration, the docking cross-bar (310) rests on the bowl (2), above the inwardly-directed rim (2C), whereas the lid (30) hanging from the cross-bar (310) is located in the bowl (2), under said inwardly-directed rim (2C) and in abutment against the latter, to allow the rising in pressure of the so-closed cooking chamber.

11. The appliance (1) according to any one of the preceding claims, **characterized in that** said opening safety device (5) comprises a lock (11) mobile between a locking position in which it prevents said lid (30) and locking element (31) from reaching said second relative position corresponding to the open configuration of the chamber and at least an unlocking position allowing said lid (30) and locking element (31) to reach said second relative position.

12. The appliance (1) according to the preceding claim, **characterized in that** said opening safety device (5) comprises an elastic return member (50) that brings said lock (11) back to its locking position.

13. The appliance (1) according to claim 11 or 12, **characterized in that**, at least one of said kinematic chain and/or control member (7) is designed to push said lock (11) back to its unlocking position in response to the displacement of the control member (7) from its closing position to its opening position when the pressure inside the chamber is lower than said predetermined safety value.

14. The appliance (1) according to any one claims 11 to 13, **characterized in that** said opening safety device (5) comprises a safety finger (12) sensitive to the pressure inside the chamber, said safety finger (12) being mobile between, on the one hand, a lower position, to which it is brought back when the pressure level inside the chamber is lower than said predetermined safety value, and on the other hand, an upper position it occupies as soon as the pressure level inside the chamber reaches said predetermined safety value, said safety finger (12) in the upper position, cooperating with the lock (11), to prevent the latter from leaving its locking position.

15. The appliance (1) according to any one the preceding claims, **characterized in that** the lid (30) is a deformable lid liable to evolve between a rest geometric configuration allowing the introduction of the lid (30) into the bowl (2) and corresponding to the open configuration of the chamber, and a deformed geometric configuration corresponding to the closed configuration of the chamber and allowing the lid (30) to come into substantially tight contact against the bowl (2) to allow the rising in pressure of the chamber.
